# EUROPEAN PATENT APPLICATION

(11) **EP 0 558 842 A1**
(43) Date of publication of application: **08.09.1993**
(21) Application number: 92301893.1
(22) Date of filing: 05.03.1992
(51) Int. Cl.: C01B 21/072

(54) **Process for preparing aluminium nitride powder**

(71) Applicant: TOKUYAMA SODA KABUSHIKI KAISHA, Tokuyama-shi Yamaguchi-ken (JP)
(72) Inventor: Kataoka, Ryohei, Kumage-gun, Yamaguchi-ken (JP); Taga, Genji, Yamaguchi-ken (JP)
(74) Representative: Myerscough, Philip Boyd (GB)

(57) **Abstract**

There is provided a process for preparing aluminium nitride powder which comprises firing an aluminium salt of aromatic carboxylic acid in the presence of nitrogen to form aluminium nitride. According to this invention, aluminium nitride of high purity can be prepared without the need of many hours' nitridation reaction.

## Description

### Detailed Explanation of the Invention:

The present invention relates to a novel process for preparing aluminium nitride powder. More particularly, the invention relates to a novel process for preparing aluminium nitride powder, in which aluminium salts of aromatic carboxylic acids are used as the starting material.

The sintered body of aluminium nitride has been widely used as substrate for semiconductor, because of its excellent thermal conductivity. The performance of the sintered body is entirely dependent on the performance of the aluminium nitride powder that is used as the starting material. Industrially, the following two methods are currently known for the preparation of aluminium nitride powders which are to be used for industrial scale production of aluminium nitride sintered bodies:
(1) direct nitridation of metal aluminium powder by heating it in the presence of nitrogen to convert it into aluminium nitride powder;
(2) carbothermal reduction method in which alumina and carbon are heated in the presence of nitrogen to be converted into aluminium nitride powder.

In the above method (1), the nitridation tends to occur at the surface only of the aluminium powder and it is difficult to advance the reaction to the inside of the powder. Furthermore, since the product solidifies, an additional step to pulverize the product is required. The pulverization entails such defects that the resultant powder cannot have a sharp particle size distribution and is contaminated by impurities such as oxygen.

Impurities such as oxygen have a merit of facilitating sintering of aluminium nitride powder, but also have the demerit of reducing thermal conductivity of the sintered body.

Particle size distribution of aluminium nitride powder is an important factor for performing the sintering uniformly. For obtaining the uniformity of sintering, the particle size distribution is required to be as sharp as possible. In this respect, the method (1) is not entirely satisfactory.

On the other hand, in the method (2), the particle size and impurities present in the starting alumina are retained in the reduced product as they are. In order to obtain aluminium nitride powder of high purity, therefore, the starting alumina must be in the form of high purity fine powder. Furthermore, since this method utilizes solid-solid reaction of alumina with a carbonaceous material, it is necessary that these starting materials are thoroughly and uniformly mixed to promote the solid-solid reaction, and such has been actually practiced. Even with such mixing, however, the reduction of alumina is still incomplete unless the alumina-carbonaceous material mixture is fully fired over a long period of time. When the reduction reaction is incomplete, unreacted alumina remains in the product, and consequently, aluminium nitride sintered body having excellent properties cannot be obtained. For these reasons, attempts to obtain aluminium nitride powder having excellent properties through the above method (2) require special arrangement for mixing the starting materials, or use of high purity alumina which is expensive, or carrying out of nitridation reaction for many hours. As a result, the resultant aluminium nitride powder becomes unavoidably expensive.

An object of the present invention is to provide a novel process for preparing aluminium nitride powder.

A further object of the present invention is to provide a process for preparing high purity aluminium nitride powder through industrially simple procedures.

Still another object of the present invention is to provide a process for preparing aluminium nitride powder, employing a technology for completing the reaction within a short time.

Other objects and advantages of the present invention will become apparent from the following description.

According to the present invention, the above objects and advantages of the invention are achieved by a process for preparing aluminium nitride powder which comprises firing an aluminium salt of aromatic carboxylic acid in the presence of nitrogen to form aluminium nitride.

The starting materials to be used in the present invention are aluminium salts of aromatic carboxylic acids.

As the aromatic carboxylic acids, preferred are, for example, the compounds which are expressed by the following formula (1): 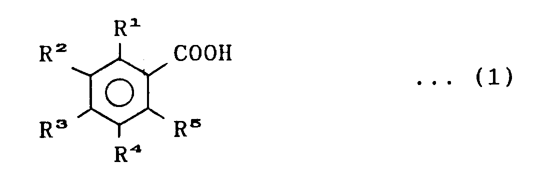
wherein R¹ to R⁵ may be same or different, and each stands for a hydrogen atom, a hydroxyl group or a carboxyl group.

Specific examples of the preferred aromatic carboxylic acid include benzoic, salicylic, phthalic, isophthalic, terephthalic, hemimellitic, trimellitic, trimesic, prehnitic, mellophanic, and mellitic acids. Of these, particularly the aromatic carboxylic acids in which 1 to 3 carboxyl groups are bonded are frequently used with advantage, for reasons of easy availability and low cost. The most preferred are the aromatic carboxylic acids in which 2 or 3 carboxyl groups are bonded, because the aluminium nitride powder obtained by nitriding them contains little residual carbon.

The aluminium salts of aromatic carboxylic acids include intramolecular salts and intermolecular salts of aromatic carboxylic acids. When an aromatic carboxylic acid containing plural carboxyl groups is used, some of the carboxyl groups may remain free.

As aluminium salts of aromatic carboxylic acids, those of benzene mono-, di- and tri-carboxylic acids are preferred.

As aluminium salts of aromatic carboxylic acids, for example, the compounds expressed by the following formula (2): 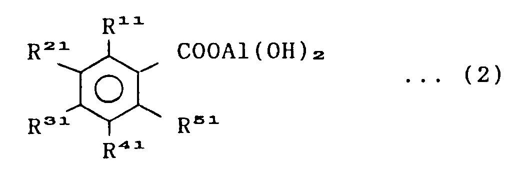
wherein R¹¹ to R⁵¹ may be same or different, and each stands for a hydrogen atom, a hydroxyl group, a carboxyl group or -COOAl(OH)₂,
are particularly preferred.

The compounds expressed by the above formula (2) are generally sparingly soluble in water and an organic solvent, have no melting point; and most of them decompose, for example, at temperatures of 500 to 600°C. Those aluminium salts also are generally decomposable under the action of acid or alkali.

That the aluminium salts of aromatic carboxylic acids have the structure as shown, for example, by the formula (2), can be confirmed by the following analyses.
(1) Infrared absorption spectral analysis:
   An absorption attributable to -COO is observed in the vicinity of 1400 cm⁻¹; also an absorption attributable to the aromatic ring is observed near 1500 cm⁻¹;
(2) Ion chromatography and fluorescent X-ray analysis:
   S and Cl are not contained; as a metal element, aluminium is detected;
(3) Elemental analysis:
   The analyzed values of carbon and hydrogen are compared with the theoretical values calculated from, for example, the above formula (1);
(4) Gravimetric analysis:
   The weight of the residue remaining after heating the compound at 1,000°C in air for an hour is compared with the theoretical value calculated from, for example, the above formula (1).

Any method may be employed for preparing aluminium salts of aromatic carboxylic acids to be used as the starting materials in the present invention. It can be obtained, for example, through reaction of a water-soluble inorganic aluminium compound with an aromatic carboxylic acid or its salt in an aqueous medium of pH 3 to 6. As the water-soluble inorganic aluminium compound, any of known compounds can be used.

As examples of the aluminium compounds that can be industrially advantageously used, inorganic aluminium salt compounds such as aluminium chloride, aluminium sulfate, aluminium nitrate, aluminium alum, etc. can be given. Aluminium slum is the most preferred, because aluminium nitride prepared therefrom exhibits high purity.

In carrying out the reaction, when the aromatic carboxylic acid used has a low solubility in water, it is recommendable to dissolve said acid in an alkaline aqueous solution of, for example, ammonium hydroxide, potassium hydroxide, sodium hydroxide, etc. As a salt of aromatic carboxylic acid, any water-soluble ones can be used without further limitations. Alkali metal salts such as ammonium salts, potassium salts, sodium salts and the like can be used with particular preference.

The reaction can be carried out, for example, by the steps of separately dissolving an inorganic aluminium compound and an aromatic carboxylic acid or its salt in water or alkaline aqueous solution in advance, and adding the two solutions simultaneously to an aqueous medium in the reactor at substantially equal rates, under stirring. Alternatively, the inorganic aluminium compound and aromatic carboxylic acid or salt thereof may be directly added to the aqueous medium in the reactor, and stirred.

The use ratio of the aromatic carboxylic acid or the salt thereof to the aluminium compound is variable depending on the kind of the organic carboxylic acid, reaction conditions, etc. The optimum ratio, therefore, can be determined in advance of practicing the reaction, according to the reactants and reaction conditions to be employed. In general, it is preferred that a molar ratio of the aluminium atoms to the aromatic compound (number of moles of Al/number of moles of aromatic compound) is within the range of 1 to 3. When the use ratio of water-soluble inorganic aluminium compound to water-soluble aromatic carboxylic acid or water-soluble aromatic caboxylate (number of moles of Al/number of moles of aromatic compound) is 2 or more and the reaction temperature is 60°C or below, there are occasions where carbon necessary for the accomplishment of the reaction is short in needed quantity. In such a case, there is often effectively employed a method of dispersing a suitable amount of ordinary carbon black which is used in blending with rubber or in printing, in at least either one of the starting materials during synthesis of the aluminium salt of aromatic carboxylic acid. While the amount of carbon black to be added is dependent on the extent of carbon shortage, it is normally sufficient to add it in such an amount that carbon content in the carbonaceous material resulting from pyrolysis and carbonation of the aluminium salt of aromatic carboxylic acid at 1,000°C for an hour in an inert atmosphere such as N₂, Ar or the like should be 27 to 40 % by weight, inter alia, 28 to 35 % by weight.

When the reaction system has a low pH, furthermore, the inorganic aluminium compound tends to remain unreacted. On the contrary, when the pH is too high, the aromatic carboxylate tends to remain unreacted. It is generally preferred, therefore, that the reaction proceeds while maintaining pH of the reaction system in the range of 3 to 6, more preferably 4 to 6. Adequate concentration of the starting materials in the reaction system is determined by solubility of the reaction materials. It is economically advantageous to select the possible highest concentration permitted by the solubility. The reaction temperature is selected from the range from room temperature, e.g., 15°C, to boiling point of water, e.g., 100°C. Normally, the temperature range of 60 to 90°C is the most preferred. The reaction time is determined according to other various reaction conditions as described above. Normally, the reaction sufficiently progresses within an hour or less.

Aluminium salts of aromatic carboxylic acids are obtained through the above reaction. The salts are generally insoluble in water, and hence, can be normally readily separated from the reaction mixtures by such means as filtration, decantation, etc. The separated aluminium salts of aromatic carboxylic acids are, if necessary, washed with water, and dried, whereby the starting material for the present invention is prepared.

According to the process of the present invention, such aluminium salts of aromatic carboxylic acids are fired in the presence of nitrogen to form aluminium nitride.

The atmosphere of nitrogen can be formed in a known manner. In general, nitrogen gas or ammonia gas is conveniently used to provide the nitrogen atmosphere. There is no critical limitation to the nitridation conditions so long as the starting aluminium salt of aromatic carboxylic acid can be converted to aluminium nitride. Usually, a satisfactory result can be obtained by the firing at the temperatures of 1,400 to 1,650°C for an hour or two. In such a firing step, nitridation reaction of said salt quickly progresses to produce aluminium nitride.

Thus obtained aluminium nitride provides very high purity aluminium nitride powder normally upon removal of residual carbon therefrom. The removal of residual carbon can generally be effected by subjecting the aluminium nitride to a heat treatment at 600 to 700°C for 1 to 4 hours, in an oxidizing atmosphere, e.g., in air.

The aluminium nitride powder obtained according to the present invention is in the form of uniform agglomerate with the mean diameter of 1 to 10 µm, normally ranging 1 to 3 µm. The particle size distribution of the powder is sharp. Furthermore, since the aluminium nitride powder contains almost no impurities, it is usually a white powder.

The process of the present invention makes it possible to produce high purity aluminium nitride powder at low cost, without the need of many hours' nitridation reaction as required in the production of aluminium nitride through nitridation using high purity alumina and carbon black as the starting materials.

The aluminium nitride powder that is prepared according to the present invention has an extremely high purity as demonstrated by working examples given later. For this reason, a sintered body resulting from sintering the aluminium nitride powder of the present invention can have a density of 3.2 g/cm³ and thermal conductivity of as high as 170 w/m.K.

Hereinafter, the invention is more concretely explained by reference to Examples and Comparative Example, it being understood that the invention is in no way limited to those Examples.

All of the aluminium salts of aromatic carboxylic acids in the following Examples were confirmed by the following means of identification.
(1) Infrared absorption spectral analysis:
   An absorption attributable to -COO is observed in the vicinity of 1,400 cm⁻¹; also an absorption attributable to the aromatic ring is observed near 1500 cm⁻¹;
(2) Ion chromatography and fluorescent X-ray analysis:
   S and Cl are not contained; as a metal element, aluminium is detected;
(3) Elemental analysis:
   The identity is confirmed by comparing the analyzed values of carbon and hydrogen with the theoretical values;
(4) Gravimetric analysis:
   The identity is confirmed by comparing the weight of the residue remaining after heating the compound in air, at 1,000°C for an hour, with the theoretical value.

### Example 1

Terephthalic acid (0.4 mol) was suspended in 700 ml of water. To the suspension 170 ml of a 25 % aqueous ammonia and a balance of water were added to make the total amount of the system 1,000 ml, followed by stirring and dissolving, to form an ammonium terephthalate solution. A 5-liter flask with round bottom, which had been charged with 2 liters of water, was heated on a mantle heater and maintained at 70°C. While stirring the content of the flask, 1 liter of the above 0.4 mol/liter aqueous ammonium terephthalate solution and 1 liter of 0.8 mol/liter of an aqueous ammonium alum solution were added into the flask simultaneously at an equal rate. Throughout this operation pH of the reaction liquid slurry was 4. After the addition was completed, the system was filtered, washed and dried to provide a white powder.

This powder was identified by means of aforesaid analyses (1) to (4), and found to have the structure below:

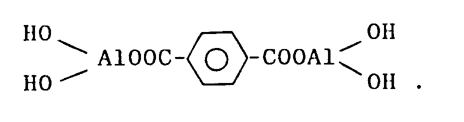

The powder was placed in a graphite crucible, heated to 1,600°C in nitrogen atmosphere, and maintained at this temperature for an additional hour. Thus obtained powder was maintained in air at 600°C for 3 hours to remove excess carbon.

Thus obtained powder was white in color, and the X-ray diffraction analysis revealed no substance other than aluminium nitride. The mean diameter of the agglomerate particles of the aluminium nitride powder, which was measured with a centrifugal automatic particle analyzer, was 1.4 µm.

### Comparative Example 1

A high purity alumina powder having a mean particle diameter of 0.4 µm (UA-3105 manufactured by Showa Denko K.K.) and an equal amount thereto of carbon black powder (MA-650B manufactured by Mitsubishi Kasei Corporation) were mixed in wet system in the presence of ethanol as the solvent, in an alumina ball mill for 4 hours. After removing the solvent, the mixture was heated to 1,600°C in an atmosphere of nitrogen, and maintained at this temperature for an additional hour. Thus obtained powder was maintained at 600°C in air for 3 hours to remove excess carbon.

The resultant powder was grayish white in color. X-ray diffraction analysis showed, besides the peak of aluminium nitride, that of alumina. The aluminium nitride formation ratio, which was inferred from the intensity ratio of the strongest peak of aluminium nitride therein to that of the product of Example 1, was 66 %. This result indicates that the reduction and nitridation of alumina did not sufficiently progress in such a short time as around an hour, in the conventional carbothermal reduction method in the presence of nitrogen.

### Example 2

In a reaction of aluminium alum with ammonium terephthalate, similarly to Example 1, a pH electrode was inserted in the reaction liquid slurry to control the latter's pH constantly at 6 during the reaction, by dropwise addition of a 2.5 % aqueous ammonia to the system.

Thus obtained powder was white in color, which was identified to be a similar aluminium salt of terephthalic acid to the one obtained in Example 1, as the result of the analyses similar to those conducted in Example 1.

This powder was heated to 1,600°C in the presence of nitrogen, and maintained at this temperature for an additional hour. The resultant powder was kept in air at 600°C for 1.5 hours to remove excess carbon.

Thus formed powder was white in color. X-ray diffraction analysis detected aluminium nitride only. The mean diameter of the agglomerate particles of the aluminium nitride powder, measured with a centrifugal automatic particle analyzer, was 1.5 µm.

### Example 3

Benzoic acid (0.1 mol) was suspended in 400 ml of water, and to the suspension a 10 % aqueous ammonia was added to dissolve the benzoic acid. The total amount of the solution was made 600 ml and pH of the solution was 7. This solution was heated to 60°C, into which 400 ml of 0.1 mol aluminium chloride solution was added dropwisely under stirring. During the operation a pH electrode was inserted into the ammonium benzoate solution, and pH of the reaction liquid slurry was adjusted to be constantly at 5 throughout the reaction by addition of 2.5 % aqueous ammonia.

Thus obtained powder was white in color, and identified to be 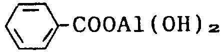
by the instrumental analyses conducted in the similar manner to Example 1.

The powder was heated to 1,600°C in the presence of nitrogen, and maintained at this temperature for an hour. The resultant powder was kept at 700°C in air for an hour to remove excess carbon.

The product powder was white in color, and its X-ray diffraction analysis detected aluminium nitride only. The mean diameter of the agglomerate particles of the aluminium nitride powder, measured with a centrifugal automatic particle analyzer, was 1.2 µm.

### Example 4

Salicylic acid (0.1 mol) was suspended in 400 ml of water, and to the suspension a 10 % aqueous ammonia was added to dissolve the salicylic acid. The total amount of the solution having pH of 7 was made 600 ml. Into this solution, 400 ml of a solution containing 0.1 mol of aluminium nitrate dissolved therein was added dropwisely at room temperature under stirring. In that occasion, pH of the reaction liquid slurry was adjusted with 2.5 % aqueous ammonia to be kept constantly at 4 throughout the reaction.

The powder so obtained was white in color, and identified to be 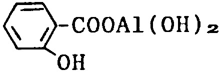
by the instrumental analyses conducted in the similar manner to Example 1.

The resultant powder was heated to 1,600°C in the presence of nitrogen, and kept at this temperature for an additional hour to remove excess carbon.

Thud obtained powder was white in color, and X-ray diffraction analysis detected aluminium nitride only. The mean diameter of the agglomerate particles of the aluminium nitride powder, measured with a centrifugal automatic particle analyzer, was 1.5 µm.

### Example 5

To an aqueous solution containing 1.44 mol of sodium hydroxide, 0.24 mol of terephthalic acid was added little by little under stirring and dissolved. The amount of the total system was made 800 ml. A 2-liter round bottom flask filled with 0.5 ℓ of water in advance was maintained at 80°C in a water bath, and to the flask the above aqueous solution containing 0.24 mol of sodium terephthalate and 800 ml of an aqueous solution containing 0.24 mol of aluminium sulfate were simultaneously added at an equal rate. The reaction liquid slurry had pH of 4 during said operation. After completion of the addition, the system was filtered, washed with water and dried to provide a white powder.

Upon instrumental analyses similar to those conducted in Example 1, this powder was found to be an aluminium salt of terephthalic acid similar to the product of Example 1.

The power was placed in a graphite crucible, heated to 1,600°C in the presence of nitrogen and kept at this temperature for an hour. Thus obtained powder was maintained at 600°C in air for 3 hours to remove excess carbon.

The ultimately obtained powder was white in color, and X-ray diffraction analysis revealed no crystalline substance other than aluminium nitride. The residual sodium determined by flame analysis was 50 ppm.

### Example 6

To an aqueous solution containing 1.50 mol of sodium hydroxide, 0.2 mol of trimesic acid was added little by little under stirring and dissolved. Further, 8 g of carbon black (MA-600, manufactured by Mitsubishi Kasei Corporation) was dispersed in the system, and the total amount of the system was made 800 ml.

To a container filled with 400 ml of water and maintained at 90°C, the 0.2 mol sodium trimesate solution containing carbon black dispersed therein and 800 ml of an aqueous solution containing 0.25 mol of aluminium sulfate were added simultaneously at an equal rate under stirring. The reaction liquid slurry had pH of 5.1 during the operation. After completion of the addition, the system was filtered, washed with water and dried to provide a black powder.

The powder was placed in a graphite crucible, heated to 1,600°C in the presence of nitrogen, and maintained at this temperature for an hour. The resultant powder was maintained at 600°C in air for 3 hours to remove excess carbon.

The ultimately obtained powder was white in color, and X-ray diffraction analysis revealed no crystalline substrate other than aluminium nitride.

## Claims

1. A process for the preparation of aluminium nitride which comprises firing an aluminium salt of an aromatic carboxylic acid in nitrogen.

2. A process according to claim 1, in which the aluminium salt of aromatic carboxylic acid is an aluminium salt of benzene mono- to hexa-carboxylic acid.

3. A process according to claim 1 or 2, wherein the aluminium salt of the aromatic carboxylic acid is an aluminium salt of a carboxylic acid of formula (1): 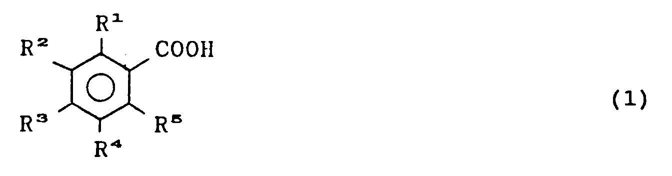 wherein R¹, R², R³, R⁴ and R⁵ which may be the same or different, are a hydrogen atom, hydroxyl group or carboxyl group.

4. A process according to any one of claims 1 to 3, wherein the aluminium salt of the aromatic carboxylic acid is of the formula (2): 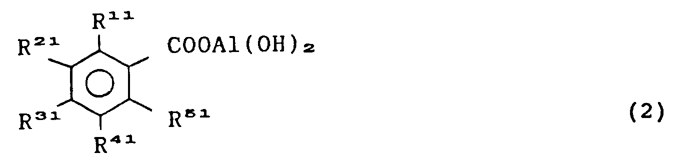 wherein R¹¹, R²¹, R³¹, R⁴¹ and R⁵¹ which may be same or different, are a hydrogen atom, hydroxyl group, carboxyl group or -COOAl(OH)₂.

5. A process according to any one of the preceding claims, wherein the firing temperature is from 1,400 to 1,600°C.

6. A process according to any one of the preceding claims, wherein the aluminium nitride produced is a powder.

7. A process according to any one of the preceding claims, which further comprises heat-treating the aluminium nitride in an oxidizing atmosphere.

8. A process according to claim 7, wherein the heat-treatment is at a temperature of from 600 to 700°C for from 1 to 4 hours.
